# EUROPEAN PATENT APPLICATION

(11) **EP 1 496 721 A2**
(43) Date of publication of application: **12.01.2005**
(21) Application number: 04016095.4
(22) Date of filing: 08.07.2004
(51) Int. Cl.: H04R 1/02, H04R 5/02

(54) **Flat display apparatus**

(30) Priority: 10.07.2003 JP 2003194773
(71) Applicant: Pioneer Corporation, Tokyo-to (JP)
(72) Inventor: Mizuno, Tomohiro, Fukuroi-shi, Shizuoka (JP); Taniguchi, Takahisa, Fukuroi-shi, Shizuoka (JP); Ishizuki, Tomonori, Tokorozawa-shi, Saitama (JP)
(74) Representative: Reinhard - Skuhra - Weise & Partner

(57) **Abstract**

A flat display apparatus has: a substantially rectangular case in which a flat type display unit for displaying an image is housed; and a stereo speaker device including a left channel speaker section and a right channel speaker section, the speaker sections having substantially same dimensions. The left channel speaker section and the right channel speaker section are configured to enable side faces in the long-side direction of the speaker sections to be attached to and detached from the upper face or the lower face of the case with being laterally arranged in one row, and also to be respectively attached to and detached from the left and right side faces of the case. The length in the long-side direction of the left channel speaker section or the right channel speaker section is equal to or smaller than one half of the length in the long-side direction of the case.

## Description

### BACKGROUND OF THE INVENTION

### 1. FIELD OF THE INVENTION

The present invention relates to a flat display apparatus.

### 2. DESCRIPTION OF THE RELATED ART

Recently, flat display apparatuses using a thin display panel such as a PDP (Plasma Display Panel), an organic EL display panel, or a liquid crystal display panel are being vigorously developed.

Such a flat display apparatus is used as a display apparatus for a television set or a video reproduction apparatus which is a core apparatus of AV apparatuses to be used in a home or the like. An AV apparatus is required to conduct stereo or multi-channel audio reproduction, and requested to be provided with speakers of high sound quality. In many AV apparatuses, in order to eliminate a space for installing speakers, a pair of left and right stereo speakers are attached to a case of a display apparatus.

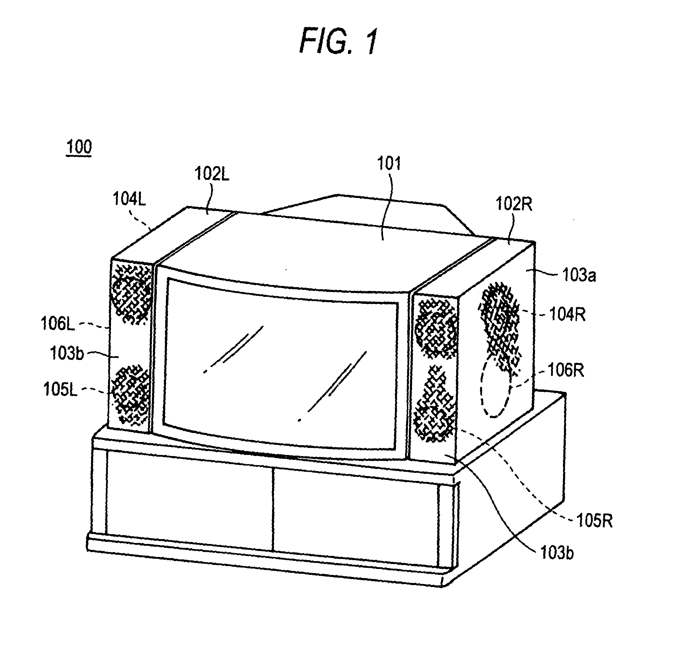

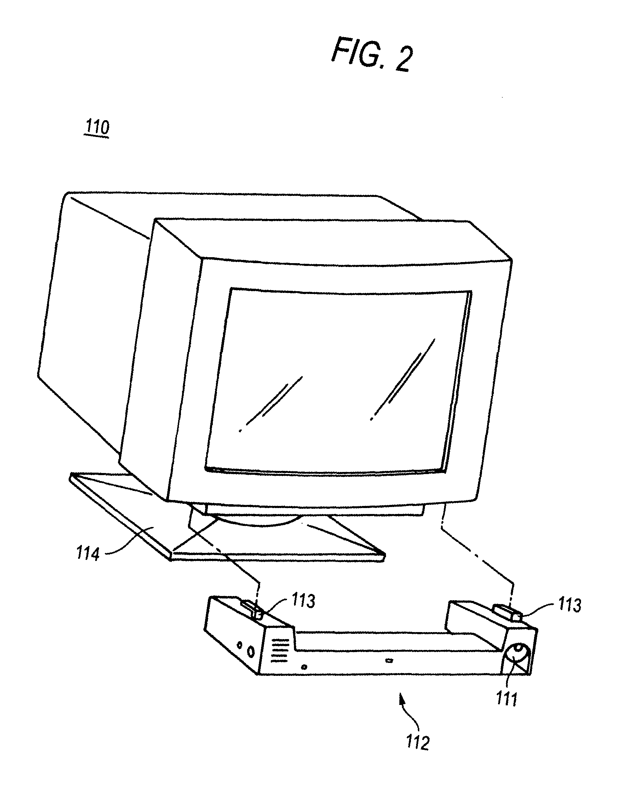

Hereinafter, a related art example in which stereo speakers (a left channel speaker section and a right channel speaker section) are attached to a case of a CRT display apparatus will be described. Fig. 1 is a view showing a television receiver in which speakers are attached to left and right side faces of a screen display unit, respectively (for example, see JP-A-6-105257 (pages 2 and 3, Fig. 1)). Fig. 2 is a view showing a video monitor in which stereo speakers are attached to the lower face (for example, see JP-A-9-37372 (pages 2 and 3, Fig. 1)).

In the television receiver 100 shown in Fig. 1, left and right speakers 102L, 102R are placed so as to be attachable to and detachable from a television receiver main unit 101. Tweeter speaker units 104L, 105L or 104R, 105R are placed on each of two different faces 103a, 103b of a case. Woofer speaker units 106L, 106R which reproduce a relatively low sound region are placed on one of the two faces on which the tweeter speaker units are placed, i.e., the face 103a.

In the video monitor 110 shown in Fig. 2, engagement members 113, 113 protrude from upper faces of a case 112 which house speakers 111, 111, respectively. The engagement members 113, 113 are engaged with engagement holes formed in the lower face of the video monitor 110, whereby the case 112 can be detachably attached to the video monitor 110 with using a dead space between the monitor and a stand 114.

In the case of a flat display apparatus, when a pair of left and right stereo speakers are to be attached to a case of the apparatus, the speakers may be attached respectively to the left and right sides of a display screen as shown in Fig. 1, or the speakers may be disposed below the display screen as shown in Fig. 2.

These speakers are set so as to be attached predetermined positions of the upper or lower face, or the side faces of the case. The attachment positions cannot be changed to another face(s) (the upper, lower, and side faces).

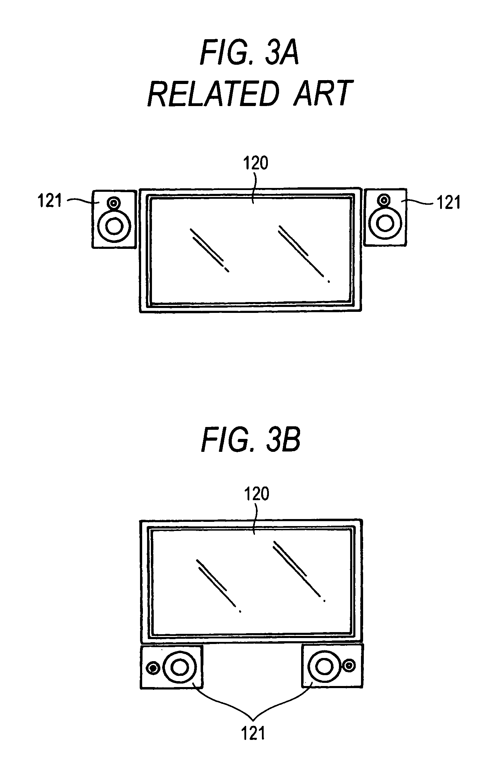

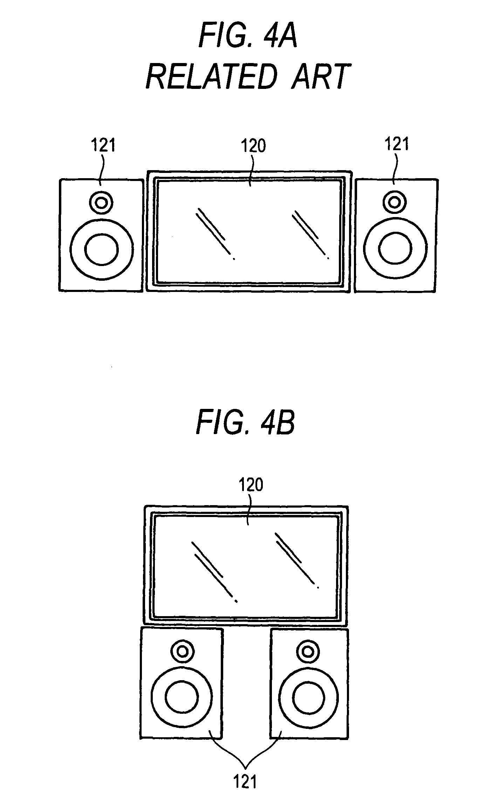

When the shape of speakers and the method of supporting a case 120 of a flat display apparatus are not restricted, speakers 121 can be placed on the side faces or the lower face of the case 120 in a relatively easy manner as in an example shown in Figs. 3A and 3B in which relatively small speakers are placed, or in that shown in Figs. 4A and 4B in which speakers are placed on left and right sides, respectively, and made equal in height to the case.

In these examples, however, the product silhouette including the speakers 121 is distorted, and the design property is lost, and thewhole size of the product is increased. Moreover, there arises a problem in that, in contrast to the features of the flat display apparatus, or the reduced thickness and the large screen size, the unity of the product, the thinness, and the ratio of the screen size to the product size are reduced, and the degree of freedom of the installation environment is lowered, whereby the commercial value is largely reduced.

### SUMMARY OF THE INVENTION

It is an object of the invention is that, unlike the related art, while enabling attachment of speakers to be changed to different faces (upper, lower, and side faces) of a case, the loss of the design property and the increase of the production size can be prevented from occurring, whereby the above-mentioned reduction of the commercial value is blocked from being caused.

In a first aspect of the invention, a flat display apparatus including: a substantially rectangular case in which a flat type display unit for displaying an image is housed; and a stereo speaker device including a left channel speaker section and a right channel speaker section which are substantially same dimensions, wherein the left channel speaker section and the right channel speaker section are attachable to and detachable from at least one of an upper face of the case and a lower face of the case in a long-side direction of the left and right channel speaker sections with being laterally arranged in one row, the left channel speaker section and the right channel speaker section are respectively attachable to and detachable from a left side of the case and a right side face of the case, and a length defined in the long-side direction of at least one of the left channel speaker section and the right channel speaker section is equal to or smaller than one half of a length in a long-side direction of the case.

### BRIEF DESCRIPTION OF THE DRAWINGS

These and other objects and advantages of this invention will become more fully apparent from the following detailed description taken with the accompanying drawings in which:
Fig. 1 is a view showing a television receiver in which speakers are attached to left and right side faces of a screen display unit, respectively in a related art;
Fig. 2 is a view showing a video monitor in which stereo speakers are attached to the lower face in the related art;
Fig. 3A is a front view of a flat display apparatus of the related art showing a state where speakers are disposed on side faces;
Fig. 3B is a front view showing a state where the speakers are disposed on the lower face;
Fig. 4A is a front view of a flat display apparatus of the related art showing a state where speakers are disposed on side faces;
Fig. 4B is a front view showing a state where the speakers are disposed on the lower face.
Fig. 5A is a front view of a flat display apparatus of an embodiment showing the case where a stereo speaker device is attached to the lower face of a case;
Fig. 5B is a front view showing the case where the stereo speaker device is attached to the left and right side faces of the case, respectively.
Fig. 6A is a rear view showing a state where the stereo speaker device of the flat display apparatus of the embodiment is attached to the side faces of the case;
Fig. 6B is a side view of the embodiment in Fig. 6A, and
Fig. 6C is a plan view of the embodiment in Fig 6A
Fig. 7A is a plan view of an attachment piece which is used in attaching in Fig. 6A to 6C;
Fig. 7B is a front view of the attachment piece;
Fig. 7C is a side view of the attachment piece;
Fig. 8A is a rear view showing a state where speaker sections of the flat display apparatus of an embodiment are juxtaposedly attached to the lower face of the case and on the same plane;
Fig. 8B is side view of the embodiment of Fig. 8A;
Fig. 8C is a bottom view of the embodiment of Fig. 8A;
Fig. 9A is a plan view showing an attachment piece which is to be used in a middle attaching portion;
Fig. 9B is a front view of the attachment piece;
Fig. 9C is a side view of the attachment piece;
Fig. 10A is a plan view showing an attachment piece which is to be used in left and right end attaching portions in Fig. 8A to 8C;
Fig. 10B is a front view of the attachment piece as shown Fig. 10A;
Fig. 10C is a side view of the attachment piece as shown Fig. 10A; and
Figs. 11A and 11B are front views respectively showing states where a stereo speaker device is attached to side faces of a case and spacers are placed in spaces formed above and below the device.

### DESCRIPTION OF THE PREFERRED EMBODIMENTS

Hereinafter, a flat display apparatus of a preferred embodiment of the invention will be described in detail with reference to the accompanying drawings.

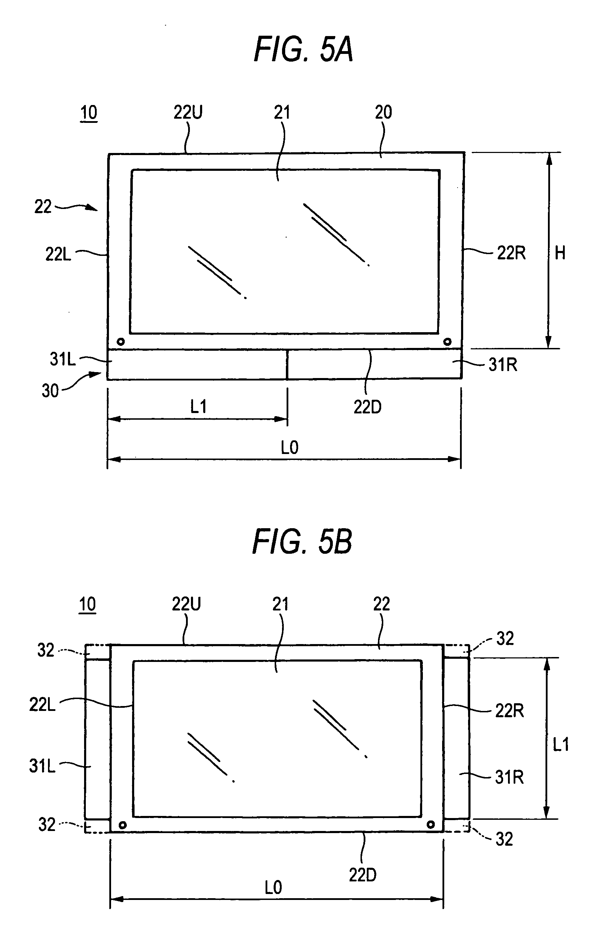

Fig. 5A is a front view of a flat display apparatus of the embodiment showing the case where a stereo speaker device is attached to the lower face of a case, and Fig. 5B is a front view showing the case where the stereo speaker device is attached to the left and right side faces of the case, respectively.

As shown in Fig. 5A to 5C, the flat display apparatus 10 has: a substantially rectangular case 22 in which a flat type display unit 21 for displaying an image is housed; and a stereo speaker device 30 consisting of a left channel speaker section 31L and a right channel speaker section 31R which have substantially same dimensions.

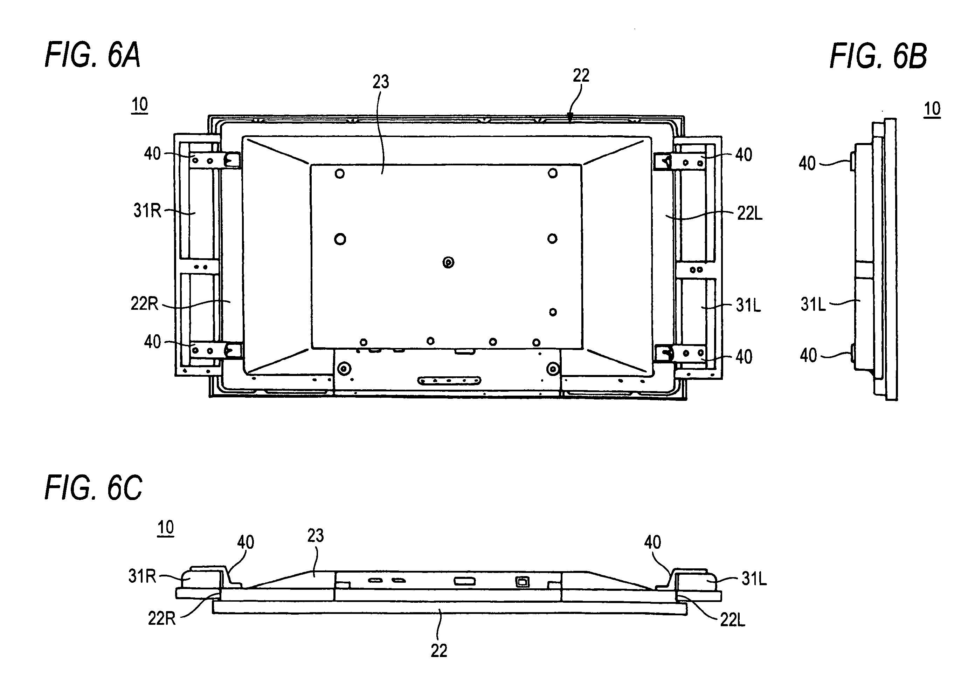

As the display unit 21, for example, a PDP (Plasma Display Panel), an organic EL display panel, or a liquid crystal display panel may be used. The display unit 21 is surrounded by a front face frame 20. The back face of the display unit is covered by a rear cover 23 (see Fig. 6). The display unit is housed in the case 22 which is rectangular as seen from the front side.

Each of the left channel speaker section 31L and the right channel speaker section 31R is configured by adequately disposing, for example, a high-range speaker unit and a low-range speaker unit, or a full-range speaker unit, etc.

The dimensions of the case 22 are indicated in the following manner. The length (width) in the long-side direction (lateral direction) is L0, and the length (height) in the short-side direction (vertical direction) is H. The left channel speaker section 31L and the right channel speaker section 31R have a length in the long-side direction of L1. The length L1 is equal to or smaller than one half of the width L0 of the case 22. Fig. 5A shows the case where L1 is one half of L0.

When the left channel speaker section 31L and the right channel speaker section 31R are attached to the lower face 22D of the case 22, therefore, the stereo speaker device 30 does not laterally protrude from the case 22 as shown in Fig. 5A.

By contrast, Fig. 5B shows the case where the left channel speaker section 31L and the right channel speaker section 31R are attached to the left and right side faces 22L, 22R of the case 22, respectively.

Usually, a screen for wide vision or hi-vision is employed in the flat display apparatus 10. Such a screen has an aspect ratio of 16:9. When also the front face frame 20 surrounding the flat display apparatus is considered, the aspect ratio of the case 22 is about 2:1.

In this case, the height H of the case 22 is slightly larger than one half of the width L0, and spaces 32 are formed between the upper and lower faces of the left channel speaker section 31L and the right channel speaker section 31R, and those of the case 22. However, the spaces are not so large that the unity of the product is impaired.

With respect to the attachment of the stereo speaker device 30 to the flat display apparatus 10 of the embodiment, the stereo speaker device is attachable to and detachable from at least one of the upper and lower faces 22U, 22D of the case, and also the side faces 22L, 22R of the case 22.

Therefore, the left channel speaker section 31L and the right channel speaker section 31R can be attached to the side faces 22L, 22R of the case 22, respectively, or alternatively to one of the upper and lower faces 22U, 22D of the case 22 with being laterally arranged in one row.

In the stereo speaker device 30, preferably, the depth in the direction toward the back face is set to be as short as possible, so that the device does not protrude from the rear cover 23 behind the apparatus, or the length in the short-side direction is set to be as short as possible. According to the configuration, the reduction of the thickness and size of the flat display apparatus 10 can be further enhanced.

The structure for attaching the stereo speaker device 30 to the flat display apparatus 10 will be specifically described with reference to Figs. 6 to 10.

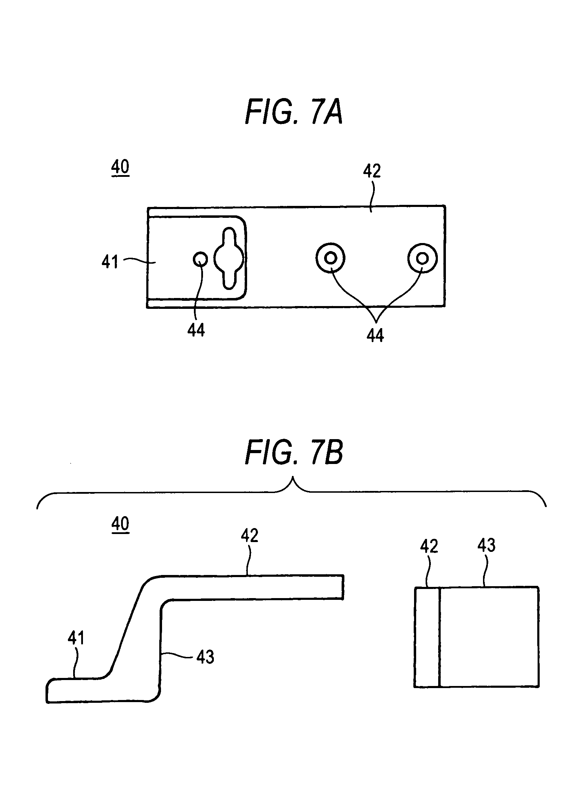

Fig. 6A is a rear view showing a state where the stereo speaker device 30 is attached to the side faces 22L, 22R of the case 22, Fig. 6B is a side view, and Fig. 6C is a plan view. Fig. 7A is a plan view of an attachment piece which is used in attaching, Fig. 7B is a front view, and Fig. 7C is a side view.

As shown in Figs. 6A to 6C, the left channel speaker section 31L and the right channel speaker section 31R are detachably attached by screws to the left and right side faces 22L, 22R of the case 22 of the flat display apparatus 10, via attachment pieces 40 which serve as attachment members, respectively. The rear cover 23 is attached to the back face of the flat display apparatus 10.

As shown in Figs. 7A to 7C, each of the attachment pieces 40 has: a case attachment portion 41 which is to be attached to the case 22; and a speaker attachment portion 42 which is to be attached to corresponding one of the left channel speaker section 31L and the right channel speaker section 31R.

Through holes 44 for attachment screws are opened in the case attachment portion 41 and the speaker attachment portion 42. The left channel speaker section 31L and the right channel speaker section 31R are detachably attached to the case 22 by fastening screws passed through the through holes 44 into screw holes formed in the case 22.

An arm portion 43 for adjusting the level difference between the case attachment portion 41 and the speaker attachment portion 42 is disposed between the attachment portions 41, 42. In accordance with the length of the arm portion 43, the surfaces of the left channel speaker section 31L and the right channel speaker section 31R can be made close to the position (in the anteroposterior direction) of the surface of the display unit 21, or flush with the surface.

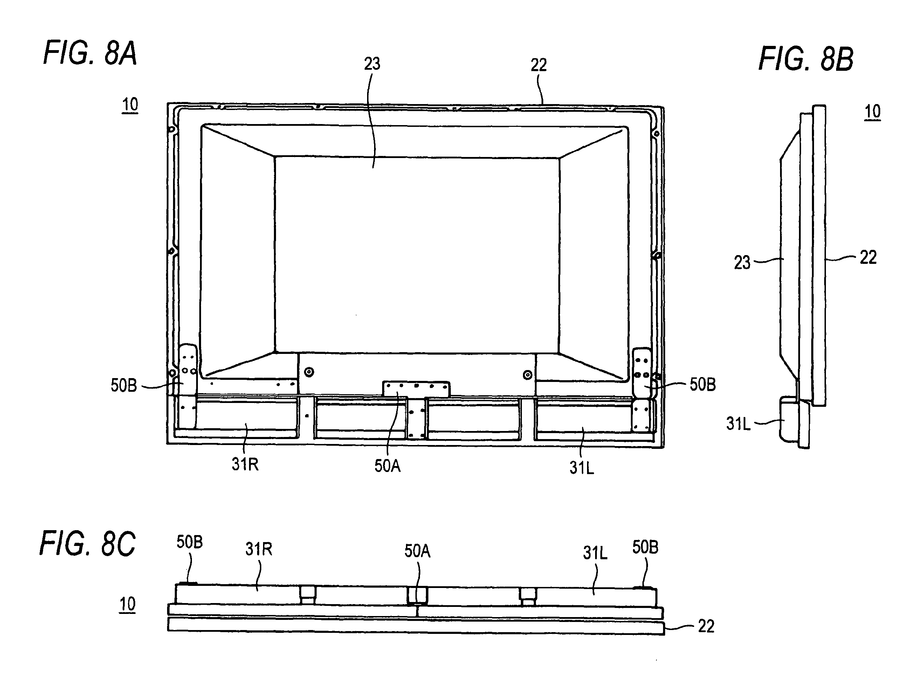

Fig. 8A is a rear view showing a state where the speaker sections 31L, 31R are juxtaposedly attached to the lower face 22D of the case 22 and on the same plane, Fig. 8B is side view, and Fig. 8C is a bottom view.

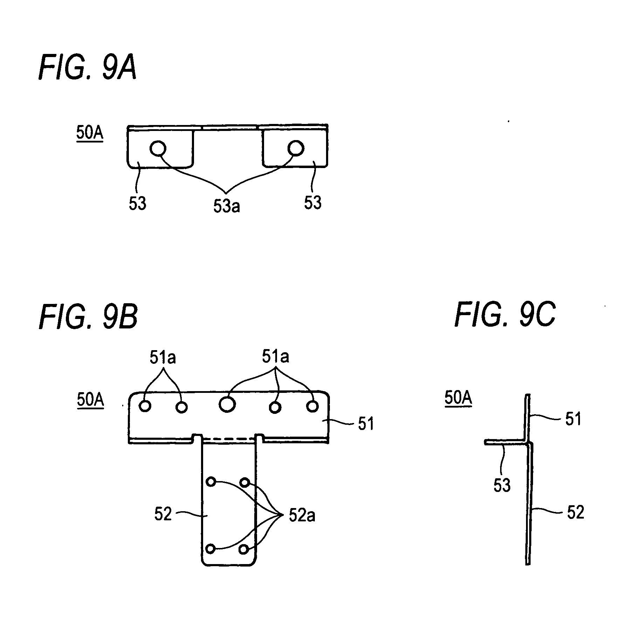

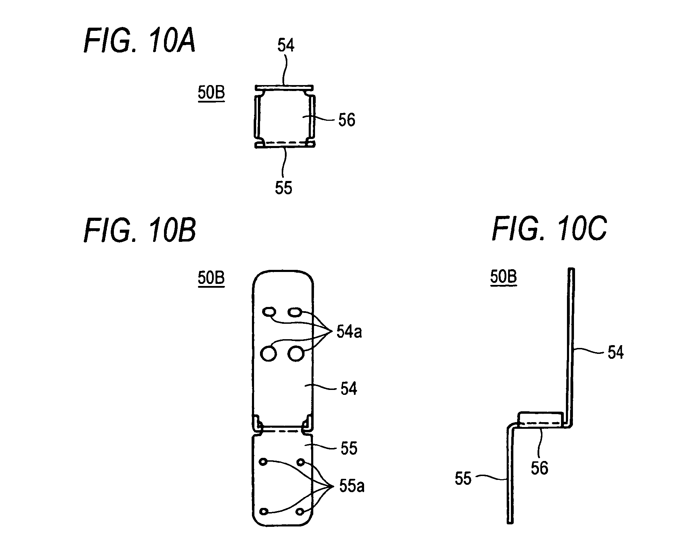

Fig. 9A is a plan view showing an attachment piece which is to be used in a middle attaching portion, Fig. 9B is a front view, and Fig. 9C is a side view. Fig. 10A is a plan view showing an attachment piece which is to be used in left and right end attaching portions, Fig. 10B is a front view, and Fig. 10C is a side view.

As shown in Figs. 8A to 8C, the left channel speaker section 31L and the right channel speaker section 31R are detachably attached by screws to the lower face 22D of the case 22 of the flat display apparatus 10, via attachment pieces 50A, 50B.

The figures show the case where the length L1 in the long-side direction of the left channel speaker section 31L and the right channel speaker section 31R is one half of the length L2 in the long-side direction of the case 22.

As shown in Figs. 9A to 9C, the attachment piece 50A is formed into a substantially T-like shape, and has: a lateral portion 51 of the T-like shape which is to be attached to the case 22; and a vertical portion 52 of the T-like shape which continuously joins together side faces on the center side of the left channel speaker section 31L and the right channel speaker section 31R.

The attachment piece further has horizontal portions 53 which perpendicular protrude from the lateral portion 51, and which are to be attached to the upper faces of the left channel speaker section 31L and the right channel speaker section 31R, respectively.

A plurality of through holes 51a for a screw are opened in the lateral portion 51. Screws are passed through the through holes 51a, and then fastened into screw holes formed in the case 22, respectively.

Two vertical rows of through holes 52a are disposed in the vertical portion 52. Screws passed through the through holes 52a of the rows are fastened into screw holes formed in end portions on the center side of the rear faces of the left channel speaker section 31L and the right channel speaker section 31R.

Through holes 53a are opened in the horizontal portions 53, respectively. Screws passed through the through holes 53a are fastened into screw holes formed in end portions on the center side of the upper faces of the left channel speaker section 31L and the right channel speaker section 31R.

According to the configuration, middle portions of the left channel speaker section 31L and the right channel speaker section 31R are detachably attached to the lower face 22D of the case 22.

By contrast, as shown in Figs. 10A to 10C, each of the attachment pieces 50B is formed into a crank-like shape, and has: a case attachment portion 54 which is to be attached to the case 22; and a speaker attachment portion 55 which is to be attached to an outer end portion of corresponding one of the left channel speaker section 31L and the right channel speaker section 31R.

An arm portion 56 is disposed between the case attachment portion 54 and the speaker attachment portion 55. The arm portion absorbs the step difference between the back face of the case 22 and the back face of corresponding one of the left channel speaker section 31L and the right channel speaker section 31R.

According to the configuration, the surfaces of the left channel speaker section 31L and the right channel speaker section 31R can be made substantially flush with the surface of the display unit 21.

Through holes 54a for a screw are opened in the case attachment portion 54. Screws are passed through the through holes 54a, and then fastened into screw holes formed in the case 22.

Through holes 55a are opened in the speaker attachment portion 55. Screws passed through the through holes 55a are fastened into screw holes formed in the upper face of corresponding one of the left channel speaker section 31L and the right channel speaker section 31R.

According to the configuration, outer end portions of the left channel speaker section 31L and the right channel speaker section 31R are detachably attached to the lower face 22D of the case 22.

In the flat display apparatus 10 described above, the left channel speaker section 31L and the right channel speaker section 31R can be detachably attached to the left and right side faces 22L, 22R of the case 22, respectively with using the attachment pieces 40, or alternatively to the lower face 22D of the case 22 with using the attachment pieces 50A, 50B.

When the attachment pieces 40 or 50A, 50B are replaced with other ones, therefore, the speaker sections can be attached to either of the side faces 22L, 22R or the lower face 22D, so that the user can freely select the attachment position in accordance with the installation space and the design. As a result, the degree of freedom in the speaker layout can be enhanced without impairing the product value.

The flat display apparatus 10 of the invention is not restricted to the embodiment described above, and may be adequately subjected to modification, improvement, etc.

In the embodiment described above, the stereo speaker device 30 is attached to the side faces 22L, 22R of the case 22, or to the lower face 22D. Alternatively, the stereo speaker device may be attached to the upper face 22U of the case 22.

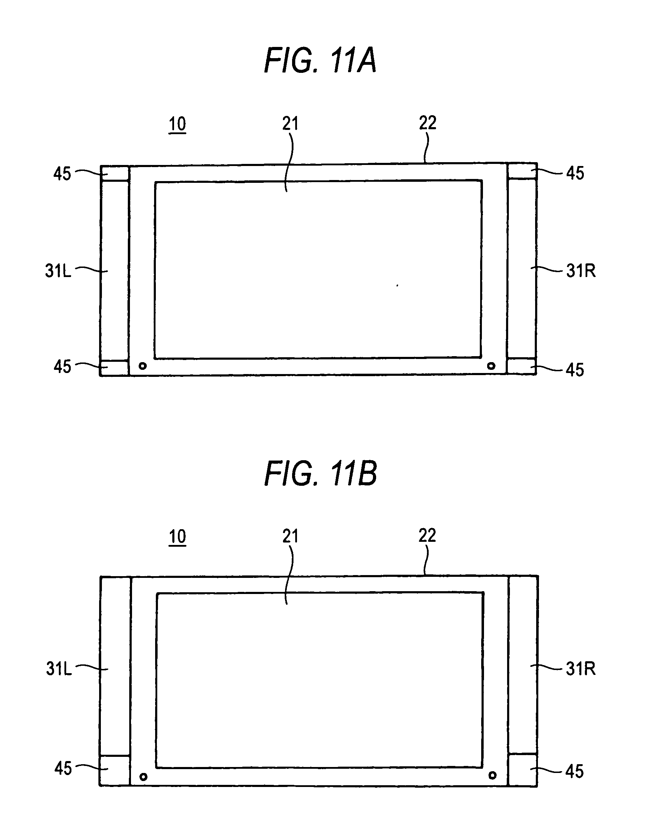

In the case where the height H of the case 22 is smaller than one half of the width L0 of the case 22, when the stereo speaker device 30 is attached to the side faces of the case 22, spaces are formed above and below the left channel speaker section 31L and the right channel speaker section 31R as shown in Figs. 11A and 11B.

Therefore, spacers 45 may be placed above and below (Fig. 11A) or below (Fig. 11B, or, of course, above) the left channel speaker section 31L and the right channel speaker section 31R. In this case, the heights of the left channel speaker section 31L and the right channel speaker section 31R can be made coincident with the height of the case 22. Consequently, the silhouette of the whole product can be simplified, so that the appearance can be further improved.

The spacers 45 may be provided with other functions, for example, a function of housing speaker cords, and a function of a holder for an accessory such as a remote controller.

As described above in detail, the flat display apparatus 10 of the embodiment has: a substantially rectangular case 22 in which the flat type display unit 21 for displaying an image is housed; and the stereo speaker device consisting of the left channel speaker section 31L and the right channel speaker section 31R which have substantially same dimensions.

The left channel speaker section 31L and the right channel speaker section 31R are configured to enable the side faces in the long-side direction to be attached to and detached from the upper face 22U or the lower face 22D of the case 22 with being laterally arranged in one row, and also to be respectively attached to and detached from the left and right side faces 22L, 22R of the case 22. The length in the long-side direction of the left channel speaker section 31L or the right channel speaker section 31R is equal to or smaller than one half of the length in the long-side direction of the case 22.

According to the configuration, while enabling changing attachment of the stereo speaker device 30 to different faces (the upper, lower, and side faces) of the case 22, the loss of the design property and the increase of the production size can be prevented from occurring. Furthermore, it is possible to solve the problem in that, in contrast to the features of the flat display apparatus 10, or the reduced thickness and the large screen size, the unity of the product, the thinness, and the ratio of the screen size to the product size are reduced, and the degree of freedom of the installation environment is lowered, whereby the commercial value is largely reduced.

The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. A flat display apparatus comprising:
a substantially rectangular case in which a flat type display unit for displaying an image is housed; and
a stereo speaker device including a left channel speaker section and a right channel speaker section which are substantially same dimensions, wherein
the left channel speaker section and the right channel speaker section are attachable to and detachable from at least one of an upper face of the case and a lower face of the case in a long-side direction of the left and right channel speaker sections with being laterally arranged in one row,
the left channel speaker section and the right channel speaker section are respectively attachable to and detachable from a left side of the case and a right side face of the case, and
a length defined in the long-side direction of at least one of the left channel speaker section and the right channel speaker section is equal to or smaller than one half of a length in a long-side direction of the case.

2. A flat display apparatus according to claim 1, wherein the length defined in the long-side direction of the case is approximately twice a length in a short-side direction of the case.

3. A flat display apparatus according to claim 2, wherein the flat type display unit has an aspect ratio of 16:9.

4. A flat display apparatus according to any one of claims 1 to 3, wherein
at least one attachment members enables the left channel speaker section and the right channel speaker section to be joined to at least one of the upper face of the case and the lower face of the case with laterally arranging the side faces in the long-side direction in one row, and
the at least one attachment members enables the left channel speaker section and the right channel speaker section to be joined to said case, respectively.

5. A flat display apparatus according to claim 4, wherein
the at least one of the attachment members is a member having a substantially T-like shape,
a lateral portion of the T-like shape is attached to the case,
a horizontal portion which perpendicular protrudes from the lateral portion is attached to the left channel speaker section and the right channel speaker section, and
side faces of center side of the left channel speaker section and the right channel speaker section are continuously joined together by a vertical portion of the T-like shape.
